(19)

Europäisches
Patentamt
European
Patent Office
Office européen
des brevets

(11) **EP 3 889 764 A1**

(12) **EUROPEAN PATENT APPLICATION**

(43) Date of publication:
06.10.2021 Bulletin 2021/40

(51) Int Cl.:
$G06F\ 7/58$ (2006.01)

(21) Application number: 20167059.3

(22) Date of filing: 31.03.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Koninklijke Philips N.V.
5656 AG Eindhoven (NL)

(72) Inventors:
• Garcia Morchon, Oscar
5656 AE Eindhoven (NL)
• Tolhuizen, Ludovicus Marinus Gerardus Maria
5656 AE Eindhoven (NL)

(74) Representative: Philips Intellectual Property &
Standards
High Tech Campus 5
5656 AE Eindhoven (NL)

(54) **PARALLEL GENERATION OF A RANDOM MATRIX**

(57) Some embodiments are directed to a cryptographic generation device for generating a random matrix. A random number initiation function may be executed in parallel for a number of random generating processes to obtain a random number state for each. Parallel random number generating processes together produce at least as many random numbers as elements in the random matrix.

Fig. 1

EP 3 889 764 A1

**Description**

FIELD OF THE INVENTION

The presently disclosed subject matter relates to a cryptographic generation device for generating a random matrix, a cryptographic generation method for generating a random matrix, a computer readable medium

BACKGROUND OF THE INVENTION

One way to address problems with key distribution is to use so-called asymmetric cryptography. In asymmetric cryptography, a key pair is used which comprises a public-key and a private-key. For this reason, asymmetric cryptography is also called public-key cryptography.

The public keys may be disseminated widely, but private keys are typically known only to few parties, e.g., only to its owner. The public key can be used to encrypt messages which can only be decrypted with the private key. In a public key encryption system, any person can encrypt a message using the receiver's public key. The encrypted message can only be decrypted with the receiver's private key. It is computationally impractical to find the private key from its corresponding public key. The public key and private key are referred to as a key pair.

Known public key encryption systems rely on cryptographic algorithms based on mathematical problems that currently admit no efficient solution. For example, the RSA public-key encryption system relies on the difficulty of integer factorization. Public key encryption based on elliptic curves relies on the difficulty of discrete logarithms.

Quantum computers pose a significant threat to modern cryptography. The two most widely adopted public key cryptosystems, namely, RSA and Elliptic Curve Cryptography (ECC), will be broken by general purpose quantum computers. Lattice-based cryptography may be used as a quantum-computer resistant alternative. Many lattice-based cryptography systems have been proposed.

For example, one such lattice-based system is called Round5. Round5 is a submission in the second round of NIST's Post-Quantum Cryptography. A description of Round5 can be found on the NIST page: https://csrc.nist.gov/projects/post-quantum-cryptography/round-2-submissions. The description document is titled "Round5: KEM and PKE based on (Ring) Learning with Rounding", dated Thursday 28th March 2019. A description of Round5 can also be found on Cryptology ePrint archive: Report 2018/725, e.g., Version: 20190126:102712. Yet a further description can be found in the article "Round5: KEM and PKE based on (Ring) Learning with Rounding Tuesday 18th February, 2020", available at https://round5.org/doc/Round5_Submission022020.pdf. These documents are included herein by reference. The latter document will be referred to as 'Round5'.

Other lattice-based cryptography documents are: FrodoKEM, "Frodo-KEM: Learning With Errors Key Encapsulation", dated March 30, 2019, a description of which can be found as second round NIST candidates at the NIST page mentioned above, and which is included herein by reference. Descriptions of these are included herein from the NIST second round candidate proposals, as well, and are included herein by reference.

For example, a second cryptographic device may be configured to use a public key of a first cryptographic device to derive a raw key. The raw key may be used to encapsulate a message, typically, a key seed, or pre-key, which in turn may be used to protect communication between the first and second cryptographic device. A lattice-based system may be set up such that both devices can derive the same raw key, or at least raw keys that are so close that they can nevertheless be used to encapsulate and recover the same key seed. A public-private key scheme may be used to derive an ephemeral symmetric key, which in turn may be used for confidentiality and/or integrity protection.

Cryptographic schemes based on an unstructured lattice, e.g., Round5 in its unstructured parameter sets R5N1* and FrodoKEM, typically require the generation of a large random matrix. The random matrix may be used to derive a public key from a private key. Although transmission of such a matrix can be avoided by sending a seed instead of the matrix itself, the matrix generation may be an important part of the computation costs. It is desired to further reduce the effort required to generate a random matrix.

SUMMARY OF THE INVENTION

A cryptographic generation device is provided for generating a random matrix. To generate the random elements in the matrix, the device has access to two functions: a random number initiation function and a random number generation function. The former takes a seed as input and produces a state of the random number generation function. The former takes a state and computes one or more random numbers. The generated random numbers are also known as pseudo random numbers, as they are generated from a seed.

Interestingly, the processor system, e.g., one or more microprocessors, electronic memory and the like, may be arranged to support a number of parallel random number generating processes. In an advantageous arrangement, the matrix elements may be generated by executing in parallel the random number initiation function for each random number generating process once. This reduces the overhead caused by the initiation function.

In an embodiment, parallel random number generating processes are supported by storing multiple random number states in a single register, e.g., a data vector or vector register. Single Instruction Multiple Data (SIMD) instructions may operate on the data vector(s). The SIMD instructions may be used in the initiation or generation function; when these are executed on the vectors multiple streams of random numbers are generated in parallel. For example, a number of parallel initiation or generation functions may be implemented in a sequence of software instructions arranged to be executed by a processor system, e.g., by a microprocessor or a core of a microprocessor. The sequence of software instructions may comprise multiple vector instructions, e.g., SIMD instructions.

For example, each parallel random number generating processes may be associated with a part of the matrix which is filled by the process. For example, a part may comprise more elements than a single row or column, e.g., multiple rows or columns.

The random matrix may be used in a lattice-based cryptographic public-private key protocol, some examples of which are referred to in the background and some examples are described herein. For example, the request to generate a random matrix may be received from another device, which may also supply the seed.

The generation device is an electronic device, e.g., set-top box, smart-card, computer, etc. It may be a mobile electronic device, e.g., mobile phone. The generation method described herein may be applied in a wide range of practical applications, in particular in lattice-based cryptographic protocols. Such protocols may be used for protected communication between devices. For example, such a protocol may produce a symmetric key K shared between the two devices. The symmetric key may be used to encrypt a message, or to protect integrity of the message, e.g., by computing a message authentication code. For example, an e-mail message may be encrypted by the key $K$, etc.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter provides a method of making the computer program available for downloading. This aspect is used when the computer program is uploaded into, e.g., Apple's App Store, Google's Play Store, or Microsoft's Windows Store, and when the computer program is available for downloading from such a store.

BRIEF DESCRIPTION OF THE DRAWINGS

Further details, aspects, and embodiments will be described, by way of example, with reference to the drawings. Elements in the figures are illustrated for simplicity and clarity and have not necessarily been drawn to scale. In the Figures, elements which correspond to elements already described may have the same reference numerals. In the drawings,

Fig. 1 schematically shows an example of an embodiment of a generation device,
Fig. 2 schematically shows an example of an embodiment of a matrix,
Fig. 3a schematically shows an example of an embodiment of a vector register,
Fig. 3b schematically shows an example of an embodiment of multiple vector registers,
Figs. 3c and 3d schematically show an example of an embodiment of multiple vector registers,
Fig. 4 schematically shows an example of public-key encryption and of private-key decryption,
Fig. 5 schematically shows an example of generation method for generating a random matrix,
Fig. 6a schematically shows a computer readable medium having a writable part comprising a computer program according to an embodiment,
Fig. 6b schematically shows a representation of a processor system according to an embodiment.

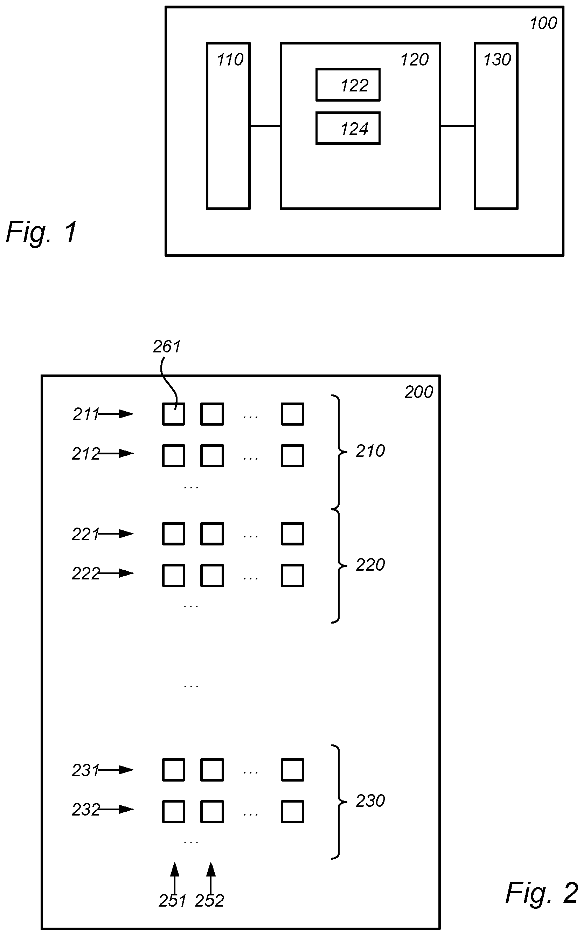

List of Reference Numerals in figures 1-3b, 6a and 6b:

| 100 | a generation device |
| 110 | an input interface |

| 120 | a processor system |
| 122 | a random number initiation function |
| 124 | a random number generation function |
| 130 | an output interface |
| 200 | a matrix |
| 261 | an element |
| 211-232 | a row |
| 251, 252 | a column |
| 210, 220, 230 | a part |
| 300, 320 | a vector register |
| 310, 330 | an instruction |
| 301-303 | a random number state |
| 321-323 | a random number state |
| 340-342 | vector registers |
| 301-309 | a state word |
| 351,352 | an instruction |

| 1000 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DETAILED DESCRIPTION OF THE EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described. In the following, for the sake of understanding, elements of embodiments are described in operation. However, it will be apparent that the respective elements are arranged to perform the functions being described as performed by them.

Further, the presently disclosed subject matter is not limited to the embodiments, as feature described herein or recited in mutually different dependent claims may be combined.

Fig. 1 schematically shows an example of an embodiment of a generation device 100. Cryptographic generation device 100 is configured for generating a random matrix. Generation device 100 comprises a processor system 120. Generation device 100 may comprise an input interface 110 and/or an output interface 130.

As will be set out herein, there are a number of cryptographic applications that require the use of an unstructured matrix, typically represented by a random matrix. Generating such a random matrix can be a significant part of the overall computation. For example, the cryptographic application may be a public-private key algorithm, e.g., the encryption of a message m, wherein the message may be a key for sharing, e.g., by encapsulation.

Typically, a cryptographic application will involve another device, although this is not necessary, e.g., for local encryption of storage, e.g., encryption of a backup storage or the like. The other computer may be, e.g., another generation device, typically configured to generate the same random matrix, e.g., by generating from the same seed.

Device 100 may communicate with other devices over a computer network. The computer network may be an internet, an intranet, a LAN, a WLAN, etc. The computer network may be the Internet. The computer network may be wholly or partly wired, and/or wholly or partly wireless. For example, the computer network may comprise Ethernet connections. For example, the computer network may comprise wireless connections, such as Wi-Fi, ZigBee, and the like. The devices may comprise a connection interface which is arranged to communicate with other devices as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna. In device 100, the communication interface may be used to receive digital messages. The digital message may comprise one or more of a public key, a seed, an encapsulated message, etc. The digital messages may be received in electronic form.

The execution of the generation device and/or generation methods may be implemented in a processor system, e.g., one or more processor circuits, examples of which are shown herein. The figures show some of the functional units that may be functional units of the processor system. For example, the figures may be used as a blueprint of a possible functional organization of the processor system. The processor circuit(s) is not shown separate from the units in the figures. For example, the functional units may be wholly or partially implemented in computer instructions that are stored at device 100, e.g., in an electronic memory of device 100, and are executable by a microprocessor of device 100. In hybrid embodiments, functional units are implemented partially in hardware, e.g., as coprocessors, and partially in software stored and executed on device 100. There may be more or even much more functional units in generation device 100. Generation device 100 may be configured for other tasks, e.g., cryptographic tasks, communication tasks, but also other tasks. Fig. 1 shows functional units for random number initiation function 122, and a random number generation function 124. Typically, the random number initiation and generation functions are deterministic functions.

Fig. 1 shows an input interface 110 which may be configured for receiving a request for the random matrix. The request may be received from another device, e.g., as part of a cryptographic protocol. For example, in lattice-based cryptography typically two communicating device compute in the same lattice represented by the same matrix. In case the lattice is unstructured, a random matrix may be used. For example, the request may comprise a seed from which the random matrix is to be generated, thus ensuring that both devices use the same matrix. The interface may also be an internal interface. For example, the generation device may be configured for a cryptographic algorithm, part of which is the generation of a random matrix; this may thus call the input interface internally to generate a random matrix, when one is needed.

The matrix is often square, but this is not necessary; many lattice-based algorithms will work with a non-square matrix, even if typically performed with a square matrix. It will be assumed herein that the random matrix is square with the understanding that a skilled person can easily adapt embodiments to a non-square matrix; for example, by partitioning the elements of the non-square matrix in multiple parts.

Fig. 2 schematically shows an example of an embodiment of a matrix 200. Elements of the matrix are denoted as small squares. One of the elements has the reference numeral 261. Matrix 200 will be further discussed below. Matrix 200 may have at least 100, at least 500, at least 1000 rows, etc. Matrix elements may comprise at least one random number; e.g., a random number of at least 8 or 16 bits, etc. A matrix element may comprise multiple random numbers, e.g., coefficients of a polynomial.

Returning to Fig. 1. To fill the random matrix with random numbers, processor system 120 is configured to support random number generating processes. In fact, processor system 120 is arranged to support a number of parallel random number generating processes for generating the elements of the random matrix; the number of parallel random number generating processes is at least 2. For example, in some embodiments, the number may be 4, 8, 16, etc. The parallel random number generating processes may be parallel process supported by multiple cores, may also be supported by vector instructions that operate on multiple data elements in a data vector in parallel. Preferably, such vector instructions may be so-called SIMD instructions, but may also be supported by bit-slicing implementations.

If needed to distinguish between the two types of parallelism they are referred to as multi-core parallelism or vector parallelism. In embodiments, each type of parallelism may be implemented, e.g., multi-core parallelism, vector parallelism, or multi-core parallelism, in combination with vector parallelism. Note that vector parallelism may be used on a multi-core machine without using the multi-cores, or not all of them, and vice-versa. For example, in an embodiment using multi-core parallelism the number of supported random number generating processes may be equal to the number of supported cores of the processor system.

For example, in an embodiment using vector parallelism the number of supported random number generating processes may be equal to the number of data elements in a vector that represent a state of a random number generator. For example, in an embodiment using both types of parallelism the number of supported random number generating processes may be equal to the product of the above two numbers.

To generate random numbers the processor system may be configured with two functions: a random number initiation function 122 and a random number generation function 124.

A random number initiation function may also be referred to as an absorb function, as it absorbs entropy into a state of the random number generation function. The random number generation function may also be referred to as an expand function, since it expands the entropy concentrated in the state into a stream of random numbers. The functions may be a so-called sponge construction. A sponge construction proceeds in two phases: the absorbing phase, e.g., in the random number initiation function, followed by the squeezing phase, e.g. in the random number generation function.

The random number initiation function and a random number generation function may be implemented as a deterministic random number generating, in particular a so-called, deterministic random bit generating (drbg) function. The function may include a first step to initialize the drbg and a second step to generate pseudorandom data. These functions can be built using a hash function or a block cipher. A random bit generating function, may be configured to generate multiple bits and/or may be called multiple times, to generate a desired number of bits, e.g., to fill a part of the matrix.

The random number initiation function may be configured to receive a seed and to generate a random number state, e.g., a random number generating function state. The seed may be received from another device, process or software routine; for example, the input interface may be configured for receiving the seed. For example, the seed may be generated by the generation device. For example, entropy may be collected from a true random number generator, from not-entirely deterministic processes running on the generation device, and from other sources. The bit-size of the seed does not need to equal the bit-size of the state. For example, the initiation function may be configured to accept seeds of different size, but to produce a state of a fixed size, e.g. 64 bits; For example, the seed may be hashed into the state.

The random number generation function may be configured to generate random numbers in conjunction with updating a random number state. For example, this may update the seed to a new seed and produce a new random number. The bit-size of the random number may be the same as the bit-size of matrix element. For example, both a matrix element and a generated random number may be 16 bits. The generated random number may also be smaller. In the latter case multiple random numbers may be generated for an element. For example, the generated random number may be only 1 bit large; to fill a 16-bit matrix element, 16 bits would have to be generated by 16 application of the generation function.

The random number generation function may be configured to receive the number of random numbers that are needed as an input parameter, or the number of desired random number may be hard coded in the random number generation function. This has the advantage that the random number generation function needs to be called only once for each supported parallel random number generation process.

To fill the random matrix with random numbers, the processor system may be configured to initiate the number of supported parallel random number generating processes. In each parallel process a stream of random numbers will be produced. Each stream filling a part of the matrix. For each random number generating process executing in parallel the random number initiation function is called to obtain a random number state for each random number generating process.

Thus, say, if four parallel processes are supported the initiating function may be called four times in parallel. In an embodiment, this is vector parallelism, though the other mentioned parallelism types are also possible.

After the initiating, for each random number generating process executing in parallel the random number generation function is called in parallel. The parallel random number generating processes together produce at least as many random numbers as elements in the random matrix. Thus if n parallel processes are supported the initiating function may be called n times, though all of them in parallel. The number of calls to the generating function may vary. For example, a single call for each process may be sufficient, e.g., if the generation function produces a sufficient number of random numbers, e.g., $\lceil d^2/n \rceil$ of them. If the generation function produces fewer random numbers, then more calls may be used. For example, $d^2$ such calls might be made, if the bit-size of the generation function output and of a matrix element are equal; Due to parallelism this may take about the time of $\lceil d^2/n \rceil$ calls. Thus, the overhead incurred by the random number initiation function is minimized, while the potential for parallelism is maximized.

In an implementation it is preferred to generate whole rows. For example, the generation function may be configured to produce $d\lceil d/n \rceil$ random numbers, that is d*ceil(d/n). An advantage of generating whole rows, is that the random matrix can be generated on the fly, performing the matrix multiplication in place; note that the matrix multiplication may also be vectorized.

For example, one way of performing the multiplication of matrix A of size $d \times d$ with a secret vector of length $d$ is shown below. This assumes that we can perform $n$ = 4 operations in parallel.

```
initialize_4x()
for (i = 0; i < d ; i+=4){
    4rows = Generate _4x(d)
    B[i:i+3] = vector_multiplication_4x(4rows, secret)
}
for (i=floor(d/4); i < d; i++){
    row = Generate (d)
    B[i] = vector_multiplication(row, secret)
}
```

In the above code-example, first the function to generate A in parallel is initialized; in this case using four vector-parallel processes (in this example using initialize_4x); for example, the initialization may generate four states for the four random number generation processes. In the first loop, 4 rows are generated together in parallel (in this example using Generate_4x(d)). Then the function vector_multiplication_4x() is called. The latter function takes those generated four rows (in this example 4rows) and multiplies them with the secret, thus filling 4 positions of the result B. For example, secret may be a vector, or a matrix; typically secret represents a private key.

The second loop may be added, if d might not be a multiple of 4, so that the last row(s) are done one by one. Alternatively, we can make B a few rows longer and discard the last values, those having index > d.

Once a sufficient number of random numbers are generated, the random matrix may be assembled. Assembling the random matrix may be done during random number production. The finished random number matrix may be stored at the generation device. The finished random number matrix may be sent over an output interface 130. For example, the random number matrix may be returned to the device or process that requested the random number matrix over the input interface. The matrix may be used internally.

In an embodiment, the generation device is the second device in a cryptographic protocol. A first device may request the second device to participate and, as part thereof, request a random number matrix. The second device will proceed to generate the random number matrix but may not return the random matrix to the caller; instead the random number matrix is used to compute cryptographic objects in the protocol. For example, in a typical application of the random number matrix, a private key in the form of a vector may be converted into a public key by a multiplication with the random matrix. Note that the latter multiplication is typically a so-called noisy multiplication, in which the multiplication result is not exact. A noisy multiplication may be made from a regular multiplication by explicitly adding noise to the end result, but also implicitly by rounding the result. Note that the multiplication is typically in a finite field or ring. For example, rounding may be achieved by mapping the multiplication result to a smaller field or ring.

In an embodiment, the random matrix elements are elements from a finite field or ring, e.g., the numbers modulo a modulus. In an embodiment, a matrix element may comprise multiple random elements, which may themselves be organized as vectors or polynomials, that can be regarded as elements of a finite field or ring extended with a formal variable, e.g., x, and modulo both a modulus (an integer) and modulo a polynomial.

Various known schemes for initiating and generation functions are available. In particular, schemes which derive a state from a seed, and which generate a sequence of random numbers by updating the state and deriving a random number. Random numbers that are generated from a seed are also referred to as pseudo random numbers. These functions may be implemented as: absorb(seed) and expand(len). Absorb(seed) taking a seed and absorbing it into an internal context, e.g., the state; expand(len) squeezes the absorbed context to generate len bytes of pseudorandom data. For example, both functions could be based on a hash or symmetric block cipher, etc.

Efficient choices for the initiation and generation function may be taken from FIPS202. For example, the initiation function may be taken to be one of the family of Keccak functions. The generation function may be an extendable-output function (XOF), e.g., SHAKE128 or SHAKE256.

Similar functions may be found in NIST Special Publication 800-185, where the cSHAKE scheme is described. cSHAKE is a customizable variant of the SHAKE function, as defined FIPS 202. In SP800-185 several algorithms are mentioned in addition to cSHAKE that may also be used. For example, in an embodiment, TupleHash in SP800-185 is used. TupleHash encodes a sequence of input strings in an unambiguous way, then encodes the requested output length at the end of the string and passes the result into cSHAKE. Since both cSHAKE and TupleHash build on the sponge function, the functions can be divided into an initiation and generation subfunctions.

TupleHash may be called as TupleHash(X, L, S) where X is a Tuple of n bit strings X[1], ..., X[n] that serve as input. L is the desired output length, and S is an optional customization string. X can include an index or the index can be the customization string. TupleHash encodes this input data in an unambiguous way and passes it to cSHAKE. Thus, it is possible to instead of calling TupleHash() a single time, call it, e.g., 4 times and run all those instances in parallel.

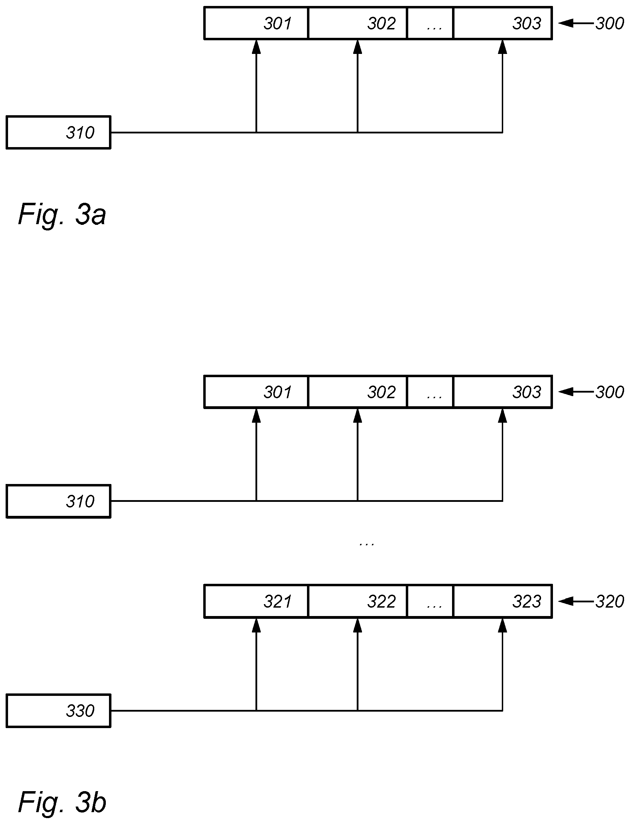

Fig. 3a schematically shows an example of an embodiment of a vector register. Shown in Fig. 3a is a vector register 300. Vector register comprises multiple data elements on which the processor system can act in parallel. In the data elements a random number state may be stored. Shown in figure 300 are random number states 301, 302 and 303. There may be fewer, e.g. two random states, there may be more than 3 random number states, e.g., 4 or 8. Also shown in figure 300 is an instruction 310 which is shown to act simultaneously on each of the states. As the states are typically different to begin with, the instructions will produce different results. The instructions or sequence of instructions may be configured to produce for each state stored in vector register 300 both (at least one) random number and an update of the state. The updated state may be stored in the same register 300; instead a further vector register may be employed to store the new states. Likewise, further vector register(s) may be used to store the generated random values, and/or temporary values.

Note that using the vector register allows the parallel generation of random values, even if only one core is available. Depending on the vector register type, the number of available processes may be computed by dividing a vector register size, e.g., bit-size by the random number state size, e.g., bit-size. For example, for a 256-bit vector and a 64-bit random number state, 4 parallel processes may be supported. For example, for a 512-bit vector and a 64-bit random number state, 8 parallel processes may be supported.

For example, the generation device, in particular the processor system may be arranged with Single Instruction Multiple Data (SIMD) instructions operating on data vectors. For example, the data vector may be arranged to store multiple random number states for multiple of the supported parallel random number generating processes.

In order to create different streams of random numbers the streams may be initiated with different states. For

**EP 3 889 764 A1**

example, the random number initiation function may be configured to generate multiple random number states. Each operation modifying the state works in words of, e.g., 64 bits, thus four states can be modified simultaneously if, e.g., 256-bit vector instructions are available. In the generation of the states, the same seed can be used but each state is personalized with a unique number. For example, a process i may be initiated with a seed $s_i = (s, a_i)$ wherein $a_i$ is a unique number. For example, one may take $a_i = i$. Seed s may be obtained from the input interface. Seed s may be generated at generation device, e.g., from locally generated entropy; Seed s may be received from another cryptographic generation device, e.g., to ensure that both devices generate the same random matrix.

For example, one may initiate a first data vector with t copies of seed s, wherein t is the number of parallel process supported by the size of a data vector. A second data vector may be initiated with $t$ values $a_i$. Vector instruction may now compute a data vector from the first and second vector that contains states for each of the t processes. If vector instructions on multiple vector registers are not supported, one could instead load a single data vector with the different values $a_i$. The value s may be accommodated in the instructions that operates on the data vector. This is possible since s is the same for each process.

Alternatively, a state may be stored in multiple words. For example, the number of parallel process t supported may be the size of a data vector divided by the size of a word of the state. A state may comprise multiple words. The updating of the state and deriving a new random number therefrom may be defined in a sequence of computations on the words. For example, state may comprise 25 words of each 64 bits. Both the initiation and the generation algorithm operate on the words. This means that these computations can be performed in parallel as well. In this case, the number of words that can be stored and operated in a data vector at the same time may determine the number of parallel processes.

For example, in an embodiment, the initiating function is configured to arrange a number of random number states in a data vector, comprising loading a corresponding number of different numbers associated with the processes into the states, e.g., indices, salts, nonces, or the like, applying a sequence of instructions to the data vector, wherein the same instructions are applied to the multiple states, the sequence of instructions depending on a seed. After the sequence of instructions finished each state is computed from the seed and the different number. In an embodiment, a state may fit in a single word. For example, one may use a 64 bit wide state. However, in an embodiment, multiple words may be used, e.g., multiple times 64 bits.

The instruction may have multiple operands, at most one of which is a data vector; nevertheless, one or more of the operands may depend on the seed, e.g., comprise the seed or part thereof, e.g., hard coded in the instructions or loaded from a memory. On the other hand, if instructions may apply to multiple data vectors, then the sequence of instructions may be applied to two data vectors, one with multiple copies of an identical seed, the other as above with multiple different numbers. The same applies to embodiments in which the state comprises multiple words. For example, an operation which is to be performed on a word of the state, two words of the state a word of the state and another operand, etc., may be performed a data vector containing that word of multiple states, or on two data vectors each containing that word of multiple states.

Once a data vector, such as data vector 300 has been initiated, preferably with a different state for each process. For example, data vector 300 may comprise 4 or 8 states, etc., to support 4 or 8 parallel streams of random number generation. For example, random number generation function may be configured to generate multiple random numbers in conjunction with updating multiple random number states in a vector.

Some embodiments use the so-called AVX instruction set or its successor the AVX2 instruction set. The Advanced Vector Extensions (AVX, also known as Sandy Bridge New Extensions) are extensions to the x86 instruction set architecture for microprocessors from Intel and AMD proposed by Intel in March 2008 and first supported by Intel with the Sandy Bridge processor shipping in Q1 2011. AVX2 expands most integer commands to 256 bits and introduces fused multiply-accumulate (FMA) operations. AVX-512 expands AVX to 512-bit support. The Advanced Vector Extensions 2 (AVX2), are also known as Haswell New Instructions, and are an expansion of the AVX instruction set. They are introduced in Intel's Haswell microarchitecture.

Fig. 3b schematically shows an example of an embodiment of multiple vector registers. Shown in Fig. 3b are vector register 300 and 320; there may be multiple registers. Each register is operated by a separate core or microprocessor so that multi-core parallelism is obtained in addition to the vector parallelism that is enabled by the data vectors themselves. Register 320 may be similar to register 310, e.g., also storing state 321-323, though having different values.

For example, an instruction 310 operates on each of the states stored in data vector 300 while an instruction 330 operates on each of the states stored in data vector 330. Instructions 310 and 330 are executed in parallel on different cores. Instruction 310 operates on each one of the states 301-303 in parallel using vector instructions. Instruction 330 operates on each one of the states 321-323 in parallel using vector instructions. Nevertheless, the instructions operating on register 310 and 330 may be the same, e.g., instruction 310 and 330 may be the same.

By employing both multi-core parallelism in addition to the vector parallelism, the number of supported processes is multiplied.

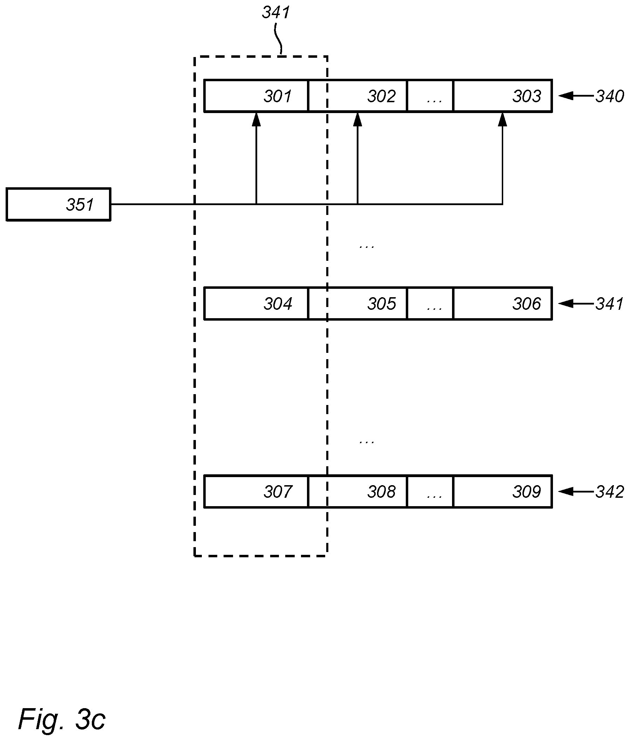

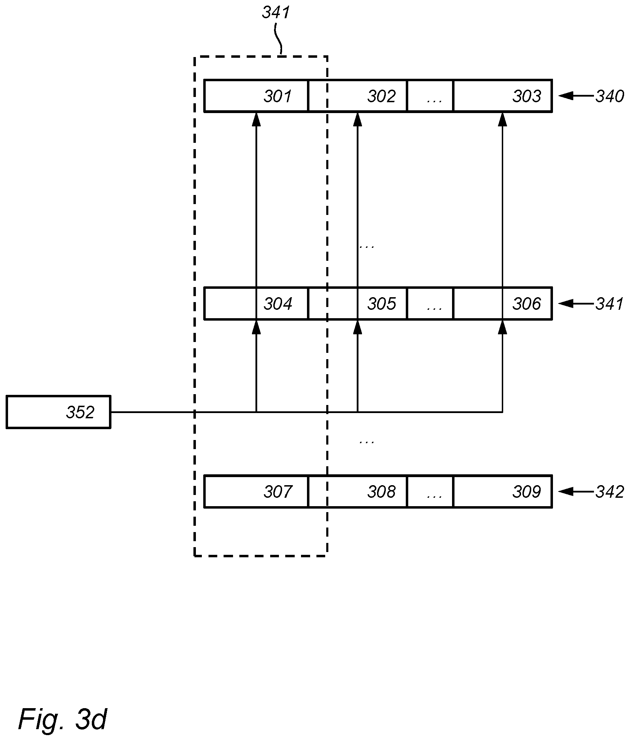

Figs. 3c and 3d schematically show an example of an embodiment of multiple vector registers. Shown in Fig. 3c are vectors 340, 341 and 342. In the embodiments illustrated by Fig. 3c a random number state comprises multiple

8

words. For example, random number state 341 comprises words 301, 304 and 307, and possibly more. A second state for a second random number generation process may comprise words 302, 305 and 308, etc. In this case, a state comprises multiple words.

To operate on the state, e.g., to initiate them or to generate random numbers and/or update them, an instruction 351 may operate on words 301, 302 and 303. For example, the words 301-303 may be loaded in a data vector 340. The instruction 351 is performed on each of the elements in data vector 340, e.g., on words 301, 302 and on 303 separately. For example, instruction 351 may be a load instruction, a negation instruction and so on.

Likewise, as shown in Fig. 3d, an instruction 352 may operate on two vectors, e.g., vectors 340 and 341. For example, instruction 352 may operate on words 301 and 304; on words 302 and 305; and on 303 and 306. For example, instruction 352 may be an XOR instruction, an ADD instruction, and on.

Note that not all parts of the states need to be loaded in registers at all time. In fact, most of the states may be stored in memory and only loaded in vector register when vector operations are needed. Note that vector 342 comprises part of the states, but in the parts shown in Figs. 3c and 3d no computations are being performed on it. Those words of the multiple states that are not in a computation may be stored elsewhere too. For example, words 307-309 may be stored in memory instead of in a register.

For example, the number of parallel supported processes may be the bit-size or word size of the vector divided by the bit-size of word size of the state words. For example, this may be 256 bit/64 bit=4 processes or 4 words /1 word = 4 processes. The states themselves can be arbitrarily large. For example, by using 25 words, a 200 bit state is supported.

Returning to Fig. 2 showing matrix 200. Matrix 200 may be a square matrix, e.g., of dimension $d$ by $d$, e.g., having $d^2$ elements. The elements are depicted as small squares, one of which has reference number 261. The matrix has rows, e.g., $d$ rows. Shown are 211, 212, 221, 222, 231 and 232. Typically, there are many more rows than shown. Likewise, the matrix can be thought as organized in columns, shown are columns 251 and 252.

In an embodiment, the matrix is portioned into parts. In an embodiment, the matrix is divided into as many parts as the number of supported parallel random number generating processes. This means that each part may be filled with random numbers in parallel by the random number generating processes executing in parallel. For example, for each part the initiation function may be called once and the generation function as often as is needed to fill the part. For example, the multiple supported processes may be associated with the multiple parts of the matrix.

In an embodiment, the parts may be selected at random. For example, if the processor system supports $t$ parallel processes, one may select $t$ parts of each $d^2/t$ matrix elements; note it may happen that $d^2$ is not exactly divisible by $t$, in which case, e.g., some parts may be 1 larger than other parts. The parts may be made up of rows and/or columns. For example, to obtain $t$ parts one may divide the number of rows by $t$. For example, in Fig. 2, part 210 comprises multiple rows, shown are rows 211 and 212. Likewise, part 220 comprises at least rows 221 and 222 and part 230 comprises at least rows 231 and 232. If the parts are equal in size or approximately equal in size, then the generation of their random number gains more from the parallelism.

In an embodiment, a part comprises consecutive rows of the random matrix and/or alternate rows.

In a first exemplary embodiment, a data vector has bit-size $b$ = 256 and the state for a random generation stream is modified in words of bit-size 64, so that the number of supported processes may be $t$ = 256/64 = 4. For example, one may call the initiation function, e.g., the absorb function, $t$ = 4 times, but in parallel so that 4 states are initialized at the same time. The generation function, e.g., the expand function, may be called as often as necessary, running with $t$ = 4 functions in parallel.

In a second exemplary embodiment, a data vector has bit-size $b$ = 256 and the state for a random generation stream is modified in words of bit-size 64, and $c > 1$ cores are available, so that the number of supported processes may be $t = c \cdot 256/64 = 4c$. For example, one may call the initiation function, e.g., the absorb function, $t$ = 4c times, but in parallel. The generation function, e.g., the expand function, may be called as often as necessary, running with $t = 4c$ functions in parallel.

In both examples, the random number generation function may be called only once for each process; for example, if the random number generation function is configured to produce as many random numbers as needed, e.g., as needed fill a part, e.g., the part associated with the process.

For example, assume that a matrix A is stored in memory as an array of length d^2. Then matrix A may be filled with the following two function calls:

```
context_4 = absorb_4(seed, personalization_tag=0, personalization_tag=1, personalization _tag=2, personalization_tag=3);
expand_4(context_4, &A[0], &A[d*ceil(d/4)], &A[d*2*ceil(d/4)], &A[d*3*ceil(d/4)], d*ceil(d/4));
```

The function absorb_4() takes seed and personalization_tags for each of the four parallel random number generation instances, e.g., (c)SHAKE instances, to obtain context 4. The personalization_tag may be unique numbers so that the random streams will be different. They can be salts, nonces, or indices, etc. Context_4 is a data structure that keeps 4 (c)SHAKE contexts in parallel. Each context might be bigger than 64 bits, but it is modified with 64-bit instructions. Thus, it is possible to modify 4 states simultaneously by means of 256-bit instructions. Expand_4() is a function that takes context_4 and generates 4 times d*ceil(d/4) elements in parallel, placing them in four parts of A. The above does not assume that $d * d$ is divisible by 4, which is not necessary. Note that, if $d$ is not a multiple of 4, then some additional rows may be filled with random numbers, that might not be used in a matrix multiplication. This may be resolved by making the parts of different sizes, e.g., some parts having an additional element. It may also be resolved by having all parts the same size, but having the part slightly overlapping, e.g., by 1 element. The latter may have the result that some matrix elements are written to twice.

Compared with some alternative ways to generate a random matrix these embodiments show an advantage.

For example, in a first comparative example, the initiation function is called only once and the expand function is called as often as needed. The first comparative example has the advantage that the initiation function is called less often but has the considerable disadvantage that nothing is gained from parallelism. Accordingly, this option is considerably slower.

For example, in second comparative example, a separate process to generate random number is started for each row of the matrix. For each process, an initiation and (at least one) expand function should be called. However, the number of rows in the matrix is considerably larger that the number of supported parallel processes. For example, if $t = 4$ parallel processes are supported, but the number of rows is larger than t, then the rows can be generated in sets of $t$ rows at a time. If the number of rows is $t \cdot s$, then the initiation function would be called $t \cdot s$ times, in s sets of $t$ parallel calls, taking s times the time of a single initiation call. Accordingly, overhead would be incurred on the initiation calls. This example divides the matrix in more blocks than can be filled in parallel, which causes too many calls to initiation.

Performance is analyzed for Round5 parameter set R5N1_5CPA_0d, taken from the Round5 specification in "Round5: KEM and PKE based on (Ring) Learning with Rounding Tuesday 18th February 2020", page 56. In this parameter set, d = 1186, $n = 1$, $q = 2^{15}$; thus, a square matrix with $d * d$ random elements is generated. Each element of the matrix is represented as two random bytes.

For this parameter set, an improvement is obtained from 37906 KCPU cycles (no parallelization, first comparative example above) to 12348 KCPU cycles (using AVX2 instructions on a single core). The second comparative example takes 13272 cycles, so the embodiment is still 7% faster. Note that the 7% improvement is obtained with little additional complexity.

There are numerous cryptographic protocols in which a random matrix is used. For example, in an embodiment the generation device is configured for a cryptographic public-private key protocol. The processor system may be configured to generate a private-key and to compute a public-key therefrom by applying a noisy multiplication between the generated random matrix and the private-key. The public key may be distributed to another device, e.g., together with a seed from which the random matrix was generated.

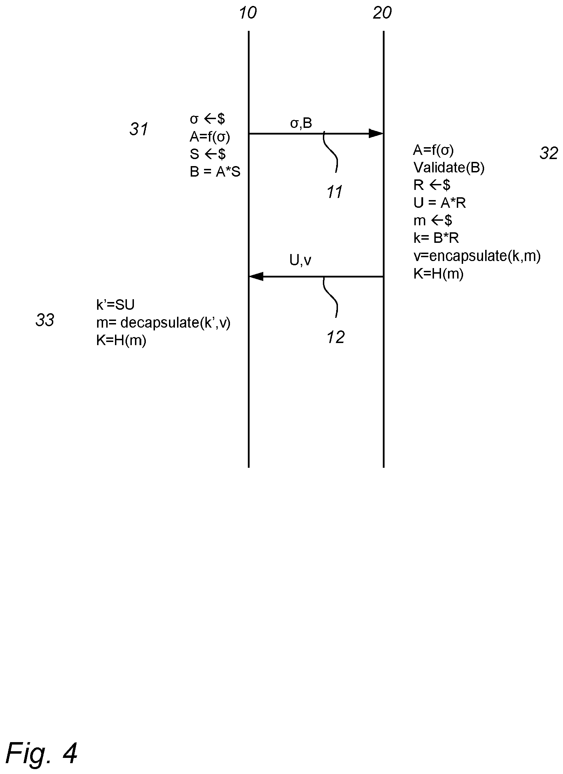

For example, a raw shared key may be derived by multiplying a received public-key received from another generation device and a private-key generated by this device. The other side can do the same with its private key and a public key obtained from this device. Because of the noise multiplication, the two raw shared keys will be approximately equal. There are various ways to exploit this mechanism, one of which is shown with respect to Fig. 4.

Fig. 4 schematically shows an example of public-key encryption and of private-key decryption. The public-key encryption side is performed by second cryptographic device 20. The private-key decryption side is performed by first cryptographic device 10. The protocol of Fig. 4 may be executed by two generation devices as described herein. The notation in Fig. 4 is as follows:

- A represents a random matrix, e.g., a matrix with elements in the integers or a ring, field, etc. The elements may be integers modulo a modulus, e.g., a power of 2.
- The elements of the public matrix may be integers modulo a modulus, e.g., a power of 2. The elements of the public matrix may be polynomials modulo a modulus, e.g., a power of 2 and a polynomial. A public matrix A is typically a square d $\times$ d matrix. Matrices modulo a modulus are referred to as a non-ring configuration. Matrices with polynomial entries modulo a polynomial and a modulus are referred to as a module configuration. The public matrix A is a random matrix. It is called a public matrix since the security of the system does not require the matrix to be private.
- $\sigma$ represents a seed for generation the random matrix A.
- **S** and **R** represent the private keys of the first cryptographic device and the second cryptographic device, respectively. Like the public matrix, a private key may be a matrix.
- **B** and **U** represent the public key matrices of the first cryptographic device and the second cryptographic device illustrated as the product of **A*R** or **A*S**. Like the public matrix, the public keys may be a matrix.

The operation * represents the one-way function of the underlying problem. The star (*) operation derives a new mathematical object, e.g., a new matrix, from two underlying matrices, while introducing some noise, e.g., a new polynomial, from two underlying polynomials, while introducing some noise. For example, noise may be introduced explicitly by adding noise to the elements, or implicitly, e.g., by rounding.

Examples of star operations can be found in (R)LWE or (R)LWR or a module version of them. For instance, A*R may mean Round((AR (mod q)), p, q), e.g., as in LWR. This means the product of R times the square matrix A modulo q. Then the result is rounded with integers p and q where p<q by performing p/q (A*R (mod q). A rounding operating may be an operator $R_{a \to b, h}(x) = \langle \lfloor \frac{b}{a}(x+h) \rfloor \rangle_b.$ In the latter formula, the angle brackets denote a modulo operation, in this case modulo b. The floor operation, in this case is downward flooring, but this could be replaced to a ceiling or true rounding operation. The value $h$ may be used, e.g., to reduce bias. For example, one may use $h = a/2b$. Typically, we have that $b < a$. In an embodiment, both $a$ and $b$ are powers of 2.

- $m$ is called the message; in this example protocol it is used to as a key seed.
- $k$ is the raw key, or noisy key. It is approximately equal for the two devices.
- $v$ represents the encapsulated message $m$
- **encapsulate(k, m)** means that the message $m$ is encapsulated with k. For example, if k lives in Z_q, then m may be represented in Z_q too. If k lives in Z_2, then this may be an XOR. Encapsulation may be done elementwise, e.g., interpreting the k and m as a matrix as:

$$v = k + m*(q/2) \ (\text{mod} \ q).$$

For example, an encapsulation function may mask message m using a key k such that an error in k has a limited effect on m, e.g., a linear effect.

- $H()$ is a key derivation function, e.g., a hash function
- **decapsulate(k', v)** means that the ciphertext c is decapsulated using key k' returning a bit string $m$.

Reference is made to:

RLWE: "On Ideal Lattices and Learning with Errors Over Rings", by Vadim Lyubashevsky, Chris Peikert, and Oded Regev,
RLWR: "Pseudorandom Functions and Lattices", by Abhishek Banerjee, Chris Peikert, and Alon Rosen,
LWE: "On Lattices, Learning with Errors, Random Linear Codes, and Cryptography", by Oded Regev.
LWR: "Pseudorandom Functions and Lattices", by Abhishek Banerjee, Chris Peikert, and Alon Rosen,
Hila5: "HILA5: On Reliability, Reconciliation, and Error Correction for Ring-LWE Encryption", by Markku-Juhani O. Saarinen

The star operation may be a noisy matrix multiplication, e.g., a regular matrix multiplication followed by adding noise, e.g., a regular polynomial multiplication followed by adding noise. Adding noise may also be integrated with the multiplication. Adding noise in the star operation may be done in multiple ways. One example of adding noise, is by adding explicit noise, e.g., by generating and adding a noise matrix or polynomial. An advantage of adding explicit noise is that the noise is under complete control of the cryptographer, and can be fine-tuned, e.g., to obtain precise control over the failure rate of the system versus its security. Furthermore, adding explicit noise has the advantage that all matrices or polynomials may be over the same ring, or field, etc., thus simplifying analysis.

Another example of adding noise is scaling down. For example, the matrices A, R, and S may have elements modulo a modulus q, e.g., integers or polynomials modulo q; the star operation may round the result of a matrix operation down from modulo q to modulo p, e.g., by multiplying with p/q and rounding, e.g., rounding up, or rounding down, or rounding to the nearest integer, etc.

In this application small letters will be used for matrices, with the understanding that matrices may need to be transposed whenever needed, e.g., as required by the dimensions of the matrices, and by the requirement that the raw key at both sides should be approximately equal. Typically, there is more than one way to do this; for example, by transposing all matrices in an embodiment, an alternative working embodiment may be obtained.

Returning to Fig. 4. Shown are an enrollment phase 31 in which the first cryptographic device 10 generates its private and public key matrices, and makes the public key and seed available to the public key encryption device 20. For example, the public key may be sent to device 20. For example, the public key may be deposited in a public-key database, from which device 20 may retrieve it. For example, devices 10 and 20 may be different devices, or may be the same device.

Generating the seed σ may be done randomly. Device 20 is configured to compute a second raw shared key (k) from the second private-key matrix (S) and the first public-key matrix (B), computing the second raw shared key comprising a matrix multiplication between the second private-key matrix (S) and the first public-key matrix (B), encapsulate the message m with at least part of the second raw shared key by applying an encapsulation function, obtaining encapsulated data (v), and transfer the second public-key matrix (U), and the encapsulated data (v) to the first cryptographic device. For example, the second public-key matrix (U), and the encapsulated data (v) to the first cryptographic device may be sent in a message 12.

After the first cryptographic device receives from the second cryptographic device the second public-key matrix (U) and the encapsulated data (v), the first cryptographic device can proceed in a decryption phase 33 to compute a first raw shared key (k') from the second public-key matrix (U) and the first private-key matrix (S), compute the first raw shared key comprising a matrix multiplication between the second public-key matrix (U) and the first private-key matrix (S), and decapsulate the encapsulated data (v) using at least part of the first raw shared key (k') to obtain message $m$. First cryptographic device 10 may compute the key $K$ from the message $K = H(m)$ using the same key derivation function as the second device 20.

In an embodiment, the public matrix A is a square matrix of dimensions d × d. The first private-key matrix R and first public-key matrix B have dimensions $d \times \bar{n}$. The second private-key matrix S and second public-key matrix u have dimensions d × $\bar{m}$. For example, one may use $\bar{m} = \bar{n}$, but this is not needed. Interestingly, the security of the system is believed to depend more on the system dimension d and on the product $B\bar{n}\bar{m}$ than on the individual sizes of $\bar{n}$ and $\bar{m}$ (in this equation the letter $B$ denotes the number of bits taken from the elements of the raw key, not the public key B). The product $B\bar{n}\bar{m}$ indicates the length in bits that can be used to derive the raw key. The former influences the size of the underlying lattice and thus the hardness of the underlying cryptographic problem. The probability of decryption failure of the scheme depends in part on the value of $B$. Higher values of $B$ worsen the failure rate and adversely affect the security of the PKE scheme against adaptive active attacks. Typically, $B$ is fixed, e.g., in the form of standardized parameter sets.

Interestingly, the second dimension ($\bar{m}$) of the second public-key matrix (u) need not be pre-determined. It can be chosen independent of the choices made for the first private and public-key. In particular, it may be chosen independent on the dimension ($\bar{n}$). In an embodiment, the second dimension ($\bar{m}$) is configurable at the second device 20. In Round5 many examples of matrix or polynomial dimensions are given. For example, one may use the following for a smaller configuration that given elsewhere herein:

| Small ciphertext configuration | |
| --- | --- |
| d, n | 757, 1 |
| q, p, t | $2^{14}$, $2^9$, $2^4$ |
| B, $\bar{n}$, $\bar{m}$ | 1, 192, 1 |
| $\mu$ | 192 |
| In the above table: <br> n: indicates the degree of polynomials in the private and/or public matrices. A value of $n$ = 1 indicates that integers modulo a modulus are used. The value $n$ may be referred to as the "ring dimension", e.g., the degree of the chosen polynomial ring. <br> d indicates the system dimension, e.g., number of columns and rows the public matrix a, <br> $\mu$ indicates the number of elements of the raw key matrix that are used to encapsulate the key seed. These elements may be pre-determined, e.g., standardized, or may be randomly selected, or may be purposely, e.g., as reliable elements, etc. The shared-secret key length is thus $\mu B$; in the above example this is 192 × 1 = 192 . | |

In an embodiment, active security may be further enhanced using a more elaborate encapsulate function, e.g., as in algorithm 9, in "Round2: KEM and PKE based on GLWR", by Hayo Baan, et al.

Key K is typically used temporarily, e.g., it may be ephemeral, e.g., used only to encrypt a single message, or a single session, protocol, handshake or the like. Key K may be a symmetric key, e.g., used as a key in a block cipher.

In the various embodiments of generation devices, including cryptographic device such as in Fig. 4, a communication interface may be selected from various alternatives. For example, the interface may be a network interface to a local or wide area network, e.g., the Internet, a storage interface to an internal or external data storage, an application interface (API), etc. The device may have a user interface, which may include well-known elements such as one or more buttons, a keyboard, display, touch screen, etc. The user interface may be arranged for accommodating user interaction for performing matrix generation, public or private key generation, execution of a cryptographic protocol and so on. The device may comprise a storage 110 which may be as an electronic memory, say a flash memory, or magnetic memory, say hard disk or the like, or optical memory, e.g., a DVD. Storage may comprise multiple discrete memories together making up storage. Storage may comprise a temporary memory, say a RAM.

Typically, the devices comprise a microprocessor which executes appropriate software stored at the device; for example, that software may have been downloaded and/or stored in a corresponding memory, e.g., a volatile memory such as RAM or a non-volatile memory such as Flash. Alternatively, the devices may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc.

In an embodiment, a generation device comprises a random number initiation circuit, and a random number generation circuit; other functions may also be implemented as a circuit. The circuits may be a processor circuit and storage circuit, the processor circuit executing instructions represented electronically in the storage circuits.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only. The circuits may also be, FPGA, ASIC or the like.

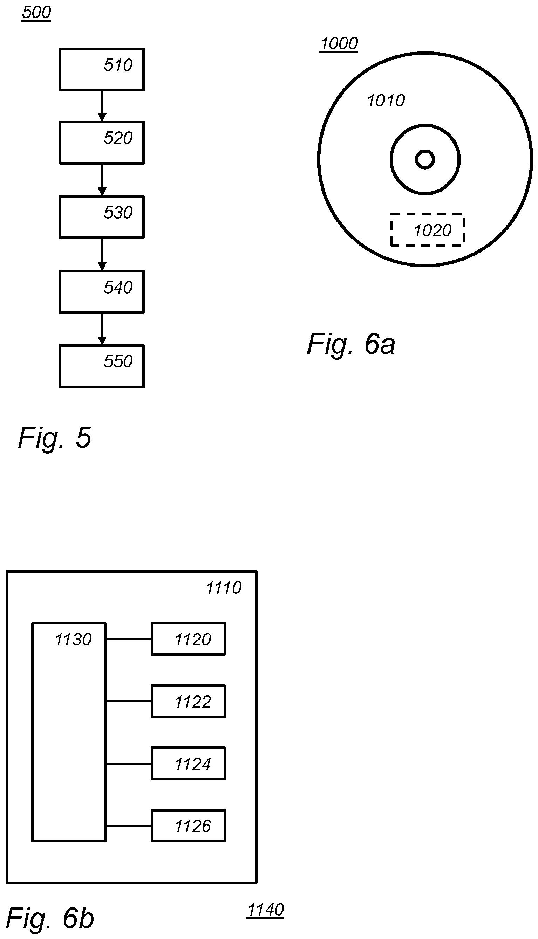

Fig. 5 schematically shows an example of generation method 500 for generating a random matrix. The method may computer implemented. Method may comprise

- receiving (510) a request for the random matrix,
- initiating (520) a number of supported parallel random number generating processes in a processor system arranged to support a number of parallel random number generating processes for generating the elements of the random matrix,
- for each random number generating process executing (530) in parallel a random number initiation function obtaining for each random number generating process a random number state, the random number initiation function being configured to receive a seed and to generate a random number state,
- for each random number generating process executing (540) in parallel a random number generation function, wherein the parallel random number generating processes together produce at least as many random numbers as elements in the random matrix, the random number generation function configured to generate random numbers in conjunction with updating a random number state,
- assembling (550) the random matrix.

Many different ways of executing the method are possible, as will be apparent to a person skilled in the art. For example, the steps can be performed in the shown order, but the order of the steps may also be varied, or some steps may be executed in parallel. Moreover, in between steps other method steps may be inserted. The inserted steps may represent refinements of the method such as described herein, or may be unrelated to the method.

Embodiments of the method may be executed using software, which comprises instructions for causing a processor system to perform method 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Fig. 6a shows a computer readable medium 1000 having a writable part 1010 comprising a computer program 1020, the computer program 1020 comprising instructions for causing a processor system to perform a matrix generation method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said matrix generation method.

Fig. 6b shows in a schematic representation of a processor system 1140 according to an embodiment of a generation device, cryptographic device, etc. as in an embodiment. The processor system comprises one or more integrated circuits 1110. The architecture of the one or more integrated circuits 1110 is schematically shown in Fig. 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the generation device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

As used herein, the term "non-transitory" will be understood to exclude transitory signals but to include all forms of storage, including both volatile and non-volatile memories.

While device 1100 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1100 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A cryptographic generation device for generating a random matrix, the device comprising

- an input interface configured for receiving a request for the random matrix,
- a processor system arranged to support a number of parallel random number generating processes for generating the elements of the random matrix,
- a processor system being configured for

- a random number initiation function configured to receive a seed and to generate a random number state,
- a random number generation function configured to generate random numbers in conjunction with updating a random number state,

- a processor system being configured to

- initiate the number of supported parallel random number generating processes,
- for each random number generating process executing in parallel the random number initiation function obtaining for each random number generating process a random number state,
- for each random number generating process executing in parallel the random number generation function, wherein the parallel random number generating processes together produce at least as many random numbers as elements in the random matrix,
- assembling the random matrix.

2. A generation device as in Claim 1, wherein the number of supported parallel random number generating processes equals,

- a register size divided by a word size of the random number state, or
- a number of cores of the processor system, or
- the product of a register size divided by a random number state size multiplied by a number of cores of the processor system.

3. A generation device as in any one of the preceding claims, the processor system being arranged with Single Instruction Multiple Data (SIMD) instructions operating on data vectors, a vector being arranged to store a word of the multiple random number states for multiple of the supported parallel random number generating processes, wherein

- the random number initiation function is configured to generate multiple random number states in parallel, and
- the random number generation function is configured to generate multiple random numbers in conjunction with updating the multiple random number states in parallel.

4. A generation device as in any one of the preceding claims, wherein the parallel random number generating processes receive the same seed and a unique number for each random number generating process.

5. A generation device as in any one of the preceding claims, wherein the random matrix is divided into as many parts as the number of supported parallel random number generating processes, each part being filled with random numbers in parallel by the random number generating processes executing in parallel.

6. A generation device as in Claim 5, wherein a part comprises multiple rows and/or columns of the random matrix.

7. A generation device as in any one of the preceding claims, wherein the input interface is configured for receiving the seed.

8. A generation device as in any one of the preceding claims configured for a cryptographic public-private key protocol, the processor system being configured to generate a private-key (S; U) and compute a public-key (B; U) from the private-key, comprising a noisy multiplication between the generated random matrix (A) and the private-key (S; U).

9. A generation device as in Claim 8 configured for a cryptographic public-private key protocol with a further generation device, the processor system being configured to

- compute a raw shared key (k; k') from a public-key of the further generation device and the private-key (s), computing the raw shared key comprising a multiplication, wherein the generation device and the further generation device are configured to generate the random matrix from the same seed.

10. A cryptographic generation method (500) for generating a random matrix, the method comprising

- receiving (510) a request for the random matrix,
- initiating (520) a number of supported parallel random number generating processes in a processor system arranged to support a number of parallel random number generating processes for generating the elements of the random matrix,
- for each random number generating process executing (530) in parallel a random number initiation function obtaining for each random number generating process a random number state, the random number initiation function being configured to receive a seed and to generate a random number state,
- for each random number generating process executing (540) in parallel a random number generation function, wherein the parallel random number generating processes together produce at least as many random numbers as elements in the random matrix, the random number generation function configured to generate random numbers in conjunction with updating a random number state,
- assembling (550) the random matrix.

11. A transitory or non-transitory computer readable medium (1000) comprising data (1020) representing instructions, which when executed by a processor system, cause the processor system to perform the method according to claim 10.

*Fig. 1*

*Fig. 2*

*Fig. 3a*

*Fig. 3b*

*341*

| 301 | 302 | ... | 303 | ← *340*

*351*

| 304 | 305 | ... | 306 | ← *341*

...

| 307 | 308 | ... | 309 | ← *342*

*Fig. 3c*

*Fig. 3d*

10          20

31

$\sigma \leftarrow \$$
$A = f(\sigma)$
$S \leftarrow \$$
$B = A*S$

$\sigma, B$ →

11

$A = f(\sigma)$        32
Validate(B)
$R \leftarrow \$$
$U = A*R$
$m \leftarrow \$$
$k = B*R$
$v = encapsulate(k, m)$
$K = H(m)$

← $U, v$

12

33

$k' = SU$
$m = decapsulate(k', v)$
$K = H(m)$

*Fig. 4*

_500_

510

520

530

540

550

_Fig. 5_

_1000_

1010

1020

_Fig. 6a_

1110

1130

1120

1122

1124

1126

_Fig. 6b_

_1140_

Europäisches
Patentamt
European
Patent Office
Office européen
des brevets

## EUROPEAN SEARCH REPORT

Application Number

EP 20 16 7059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Erdem Alkim ET AL: "FrodoKEM Learning With Errors Key Encapsulation Algorithm Specifications And Supporting Documentation Contents", <br><br> 25 March 2020 (2020-03-25), XP055719350, Retrieved from the Internet: URL:https://frodokem.org/files/FrodoKEM-specification-20200325.pdf [retrieved on 2020-07-31] | 1-7,10, 11 | INV. G06F7/58 |
| Y | * sections 2.2.5 and 3 * <br> ----- | 8,9 | |
| X | Anonymous: "PQCrypto-LWEKE/fips202x4.c at master . microsoft/PQCrypto-LWEKE . GitHub", <br><br> 6 March 2019 (2019-03-06), pages 1-6, XP055719374, Retrieved from the Internet: URL:https://github.com/microsoft/PQCrypto-LWEKE/blob/master/src/sha3/fips202x4.c [retrieved on 2020-07-31] | 1-7,10, 11 | |
| Y | * the whole document * <br> ----- | 8,9 | TECHNICAL FIELDS SEARCHED (IPC) <br><br> G06F |
| X | Anonymous: "PQCrypto-LWEKE_frodo_macrify.c at master . microsoft_PQCrypto-LWEKE . GitHub", <br><br> 25 April 2019 (2019-04-25), pages 1-13, XP055719423, Retrieved from the Internet: URL:https://github.com/microsoft/PQCrypto-LWEKE/blob/master/src/frodo_macrify.c [retrieved on 2020-07-31] | 1-7,10, 11 | |
| Y | * the whole document * <br> ----- <br><br> -/-- | 8,9 | |

The present search report has been drawn up for all claims

| Place of search | Date of completion of the search | Examiner |
|---|---|---|
| Munich | 31 July 2020 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 20 16 7059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOS JOPPE ET AL: "CRYSTALS - Kyber: A CCA-Secure Module-Lattice-Based KEM", 2018 IEEE EUROPEAN SYMPOSIUM ON SECURITY AND PRIVACY (EUROS&P), IEEE, 24 April 2018 (2018-04-24), pages 353-367, XP033373216, DOI: 10.1109/EUROSP.2018.00032 [retrieved on 2018-07-06] | 1-7,10, 11 | |
| Y | * section 7 * | 8,9 | |
| Y | EP 3 624 391 A1 (KONINKLIJKE PHILIPS NV [NL]) 18 March 2020 (2020-03-18) * paragraph [0050] - paragraph [0054] * | 8,9 | |

TECHNICAL FIELDS
SEARCHED (IPC)

The present search report has been drawn up for all claims

| Place of search | Date of completion of the search | Examiner |
|---|---|---|
| Munich | 31 July 2020 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 7059

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2020

| Patent document cited in search report | | Publication date | Patent family member(s) | Publication date |
|---|---|---|---|---|
| EP 3624391 | A1 | 18-03-2020 | EP 3624391 A1<br>WO 2020053013 A1 | 18-03-2020<br>19-03-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Round5: KEM and PKE based on (Ring) Learning with Rounding,* 28 March 2019
- *Round5: KEM and PKE based on (Ring) Learning with Rounding Tuesday 18th February, 2020,* 18 August 2020, https://round5.org/doc/Round5_Submission022020.pdf.
- **FRODOKEM.** *Frodo-KEM: Learning With Errors Key Encapsulation,* 30 March 2019
- *Round5: KEM and PKE based on (Ring) Learning with Rounding Tuesday 18th February 2020,* 18 February 2020, 56
- **HAYO BAAN.** *Round2: KEM and PKE based on GLWR*